(19) Europäisches Patentamt
European Patent Office
Office européen des brevets

(11) **EP 3 596 582 B1**

(12) **FASCICULE DE BREVET EUROPEEN**

(45) Date de publication et mention
de la délivrance du brevet:
**21.04.2021 Bulletin 2021/16**

(21) Numéro de dépôt: **18724958.6**

(22) Date de dépôt: **23.04.2018**

(51) Int Cl.:
***G06F 3/01*** *(2006.01)*

(86) Numéro de dépôt international:
**PCT/FR2018/051012**

(87) Numéro de publication internationale:
**WO 2018/197794 (01.11.2018 Gazette 2018/44)**

(54) **INTERFACE A RETOURNEMENT TEMPOREL GÉNÉRANT UNE LUBRIFICATION ACOUSTIQUE**

ZEITUMKEHRSCHNITTSTELLE ZUR ERZEUGUNG EINER AKUSTISCHEN SCHMIERUNG

TIME REVERSAL INTERFACE GENERATING AN ACOUSTIC LUBRICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2017 FR 1753536**

(43) Date de publication de la demande:
**22.01.2020 Bulletin 2020/04**

(73) Titulaire: **Commissariat à l'Energie Atomique et aux Energies Alternatives
75015 Paris (FR)**

(72) Inventeurs:
• **BOLZMACHER, Christian
92120 Montrouge (FR)**
• **HUDIN, Charles
75013 Paris (FR)**
• **HAFEZ, Moustapha
94110 Arcueil (FR)**

(74) Mandataire: **Brevalex
95, rue d'Amsterdam
75378 Paris Cedex 8 (FR)**

(56) Documents cités:
**WO-A1-2013/182611**

• **HUDIN CHARLES ET AL: "Localized Tactile Feedback on a Transparent Surface through Time-Reversal Wave Focusing", IEEE TRANSACTIONS ON HAPTICS, IEEE, USA, vol. 8, no. 2, 1 avril 2015 (2015-04-01), pages 188-198, XP011584737, ISSN: 1939-1412, DOI: 10.1109/TOH.2015.2411267 [extrait le 2015-06-17] cité dans la demande**

**Description**

## DOMAINE TECHNIQUE ET ÉTAT DE LA TECHNIQUE ANTÉRIEURE

La présente invention se rapporte à une interface à retournement temporel apte à générer une lubrification acoustique, pouvant être notamment mise en œuvre dans une interface tactile, par exemple pour simuler un effet de texture. L'interface selon l'invention peut également être mise en œuvre dans le cadre de la micromanipulation, de l'optique, de la biologie,...

Les interfaces de simulation tactile sont utilisées par exemple dans le domaine des interfaces homme-machines. Elles peuvent également être utilisées dans les domaines de l'optique, de l'acoustique, de la chimie, et de la fabrication automatisée... Une interface de stimulation tactile peut par exemple être mise en œuvre dans des smartphones, écrans, tableau de bords, tablettes...

Une interface tactile est par exemple apte à restituer une information tactile, telle qu'une texture, un relief, une rugosité variable dans le temps et/ou l'espace, une illusion d'appuyer sur un matériau souple, de presser une touche, en fonction des informations présentes sur l'écran et/ou de l'opération effectuée par l'utilisateur.

On cherche en particulier à restituer la sensation d'une texture lors de l'exploration tactile d'une surface.

Pour cela, on génère des vibrations ultrasonores dans une plaque ; en corrélant l'amplitude des vibrations au mouvement d'un doigt à la surface de la plaque, l'utilisateur a l'illusion d'une surface texturée. Il s'agit en fait de faire varier le coefficient de friction entre le doigt et la plaque, on parle alors de lubrification acoustique ou de « squeeze film ». La modulation du niveau de lubrification en fonction de la position du doigt, plus particulièrement l'alternance de zones à fort puis faible coefficient de friction, est perçue par l'utilisateur comme une texture. La réduction de friction produit un effet perceptible uniquement lorsque le doigt est en mouvement sur la surface.

Une telle technique est par exemple décrite dans le document T. Watanabe and S. Fukuki, "A method for controlling tactile sensation of surface roughness using ultrasonic vibration," presented at the IEEE International Conference on Robotics and Automation, 1995, pp. 1134-1139.

Afin de produire ces vibrations, une interface de l'état de la technique met en œuvre un réseau d'actionneurs, par exemple piézoélectriques ou électrostatiques, qui appliquent un mouvement à la surface de l'interface. Or, afin de produire un effet perceptible et simuler une réduction de friction, l'amplitude des vibrations produites est au moins de l'ordre du micromètre. Pour atteindre une telle amplitude, la surface de la plaque est mise en résonance en pilotant les actionneurs avec un signal harmonique de fréquence correspondant à une fréquence propre de la surface. Cette excitation, identique pour tous les actionneurs, a plusieurs inconvénients :

- D'une part, toute la surface est mise en vibration par les actionneurs. Il en résulte que tous les doigts en contact avec la surface perçoivent sensiblement le même stimulus, en effet cette sensation dépend de la position des doigts par rapport aux nœuds et ventres de vibrations, mais cette position n'est pas contrôlable. Il n'est donc pas possible, dans le cas où au moins deux doigts sont en contact avec la surface, d'ajuster l'amplitude de vibration au niveau de chaque doigt et donc de stimuler une texture différente pour chaque doigt.
- D'autre part, pour que les ondes produites dans la plaque par les différents actionneurs s'additionnent constructivement, les actionneurs sont placés en des points de la surface vibrant en phase. A une fréquence propre de la plaque, les contributions de deux actionneurs excités avec le même signal mais situés en des points vibrant en opposition de phase interfèrent de façon destructive, résultant en une excitation nulle. Le pilotage avec un signal unique impose donc des contraintes sur l'emplacement des actionneurs selon le mode propre excité.
- De plus, les modes propres d'une plaque présentent une alternance de ventres de vibration ayant une amplitude maximale, et de nœuds ayant une amplitude nulle. L'excitation modale produit donc un champ de vibration et donc une réduction du coefficient de friction non homogène sur la surface.
- Par ailleurs, pour obtenir une forte amplitude à une fréquence propre, l'atténuation des vibrations dans la surface doit être faible. Or cette faible atténuation implique un temps de réponse du système long, ce qui limite la finesse des textures tactiles pouvant être restituées.

Par ailleurs, il existe des interfaces tactiles utilisant le procédé de retournement temporel, par exemple décrites dans le document C. Hudin, J. Lozada, et V. Hayward, « Localized Tactile Feedback on a Transparent Surface through Time-Reversal Wave Focusing », IEEE Transactions on Haptics, vol. 8, no 2, p. 188 198, avr. 2015. L'interface comporte une plaque de verre et des actionneurs disposés en contact avec et en périphérie de la plaque de verre. Les actionneurs piézoélectriques propagent des ondes acoustiques dans une plaque de verre. Ce dispositif permet de produire une impulsion de quelques µs en un point voulu de la surface, l'impulsion présentant une forte amplitude, par exemple de l'ordre de 10 µm.

Ce document propose de répéter le procédé de focalisation par retournement temporel afin de former un train d'impulsions de déplacement afin d'offrir une stimulation intensifiée. Mais cette répétition d'impulsions ne permet pas d'obtenir un effet de lubrification acoustique notable.

Le document WO20013/182611 décrit une interface de stimulation tactile dans laquelle les efforts à appliquer sont calculés par un procédé de retournement temporel.

## EXPOSÉ DE L'INVENTION

C'est par conséquent un but de la présente invention d'offrir une interface apte à générer un effet de lubrification acoustique notable, notamment une interface de stimulation tactile permettant par exemple une simulation d'une texture.

Le but énoncé ci-dessus est atteint par les revendications attachées à cette description, qui définissent la présente invention.

On propose une interface comportant une surface, au moins un actionneur apte à appliquer un effort sur la surface, et des moyens de commande dudit actionneur mettant en œuvre un procédé de retournement temporel associé à une convolution par une fonction continue représentative de l'effet de lubrification acoustique souhaité.

La nature discontinue des impulsions générées au point de focalisation par le procédé de retournement temporel est transformée en déplacement continu en convoluant les réponses impulsionnelles retournées du procédé de retournement temporel en un point de focalisation par une fonction continue. Le déplacement continu au point de focalisation simule de manière localisée l'effet souhaité. Par exemple, la fonction représentative peut être une fonction sinusoïdale, une fonction carrée, en dent de scie, voire une fonction aléatoire.

La convolution par une fonction continue réduit l'amplitude au point de focalisation, si celle-ci est insuffisante pour être perçue, elle est suffisante pour générer un effet de lubrification.

En d'autres termes, les inventeurs ont réussi à générer un effet de lubrification acoustique en mettant en œuvre un procédé de retournement temporel.

Dans le cas d'une interface tactile, en mettant en œuvre un procédé de retournement temporel, la stimulation est localisée, il est alors possible de générer au niveau de plusieurs doigts des niveaux de friction différents.

De plus, les impulsions produites par ce procédé sont de fortes amplitudes, par exemple de l'ordre de 1 $\mu$m. Il n'est alors pas nécessaire d'utiliser une surface présentant une faible atténuation. Les niveaux de lubrification peuvent alors varier plus rapidement, les textures simulées sont alors plus fines.

De manière très avantageuse, les actionneurs mis en œuvre dans une interface appliquant un procédé de retournement temporel, peuvent être disposés avec une grande liberté. De préférence ils sont disposés au niveau des bords de la surface, et ne gênent alors pas la visibilité d'un écran qui serait disposé sous la surface.

Dans un mode avantageux, le niveau de lubrification générée est modulé, ainsi le niveau de friction varie au cours du déplacement du doigt, par exemple pour confirmer à l'utilisateur qu'il suit effectivement le bon chemin sur la surface, ou pour simuler une texture.

La présente invention a alors pour objet une interface comportant une surface, au moins un actionneur destiné à appliquer un effort sur ladite surface, et des moyens de commande dudit au moins un actionneur, lesdits moyens de commande étant destinés à envoyer à l'actionneur des signaux correspondant aux efforts à appliquer à ladite surface, lesdits efforts étant déterminés par un procédé de retournement temporel, dans laquelle les moyens de commande comportent une base de données de réponses impulsionnelles retournées, une base de données des effets de lubrification acoustique comportant au moins une fonction continue représentative d'un effet de lubrification acoustique, et des moyens de convolution d'une réponse impulsionnelle retournée à une fonction continue, et dans laquelle les moyens de commande sont configurés, pour produire une lubrification acoustique dans au moins une zone donnée de la surface, à générer au moins un signal formé à partir d'une convolution d'une réponse impulsionnelle retournée déterminée à partir de la base de données de réponses impulsionnelles retournées à une fonction continue de la base de données des effets de lubrification acoustique.

Dans un exemple avantageux, les moyens de commande sont configurés pour commander ledit au moins un actionneur de sorte que des lubrifications acoustiques différentes soient générer dans au moins zones de la surface simultanément.

Par exemple, la base de données des effets de lubrification acoustique comporte au moins une fonction sinusoïdale.

Avantageusement, l'interface comporte des moyens de détection du contact d'au moins un objet avec la surface et des moyens de suivi du déplacement relatif dudit objet et de la surface. Les moyens de détection du contact d'au moins un objet avec la surface et/ou les moyens de suivi du déplacement relatif dudit objet et de la surface peuvent être de type capacitif, de sorte à ne produire une lubrification acoustique qu'au niveau du contact entre l'objet et la surface.

Selon une caractéristique additionnelle, l'interface peut comporter des moyens de détection de la force de contact entre au moins un objet et la surface, et les moyens de commande peuvent être configurés pour moduler l'effet de lubrification acoustique en fonction de ladite force de contact.

L'interface de stimulation tactile peut avantageusement comporter plusieurs actionneurs.

La surface est par exemple portée par une plaque, le ou les actionneurs étant situés en contact avec la plaque au niveau d'au moins un bord de celle-ci. La plaque est avantageusement transparente.

La présente invention a également pour objet une interface de stimulation tactile comportant une interface selon l'invention, la surface étant destinée à être explorée tactilement par au moins un organe d'un utilisateur.

Les moyens de commande sont avantageusement configurés pour moduler l'effet de lubrification acoustique en fonction du déplacement relatif dudit organe et de ladite surface de sorte à simuler un effet de texture.

Les moyens de commande peuvent également être avantageusement configurés, à partir de la base de données de réponses impulsionnelles retournées, pour envoyer à l'actionneur des signaux correspondant à des efforts à appliquer à ladite surface de sorte à stimuler tactilement ledit organe selon un motif tactile donné.

Selon une caractéristique additionnelle, l'interface de stimulation tactile peut comporter des moyens pour au moins réduire l'adhérence dudit organe à la surface due à une accumulation d'humidité.

La présente invention a également pour objet un procédé de commande d'une interface selon l'invention, de sorte générer au moins un effet de lubrification acoustique dans au moins une première zone donnée, comportant les étapes :

a) détermination d'une réponse impulsionnelle retournée,
b) sélection d'une fonction continue en fonction de l'effet de lubrification acoustique souhaité,
c) convolution de ladite réponse impulsionnelle retournée à ladite fonction continue,
d) génération d'un signal sur la base du résultat de ladite convolution et envoi dudit signal audit au moins un actionneur et génération d'impulsions.

Les étapes a) à d) sont avantageusement réalisées simultanément pour la première zone et pour au moins une deuxième zone distincte de la première zone, et lors de l'étape d) le signal envoyé audit actionneur est avantageusement la somme du signal généré pour la première zone et le signal généré pour la deuxième zone.

Dans un exemple de réalisation, lors de l'étape a), la réponse impulsionnelle retournée est choisie dans une base de données.

Dans un autre exemple de réalisation, lors de l'étape a), la réponse impulsionnelle retournée est déterminée par interpolation entre au moins deux réponses impulsionnelles retournées choisies dans une base de données.

Dans le cas où l'interface est une interface de stimulation tactile, le procédé peut comporter une étape préalable à l'étape a) de détection d'une zone contact entre l'organe et le doigt, et, lors de l'étape a), la réponse impulsionnelle retournée peut être déterminée pour ladite zone de contact.

Le procédé de commande peut comporter une étape, en amont de l'étape d), de modulation de l'effet de lubrification acoustique en fonction du déplacement relatif d'un organe en contact avec la surface.

Avantageusement, la force exercée par l'organe sur la surface est mesurée et est prise en compte pour moduler l'effet de lubrification acoustique.

## BRÈVE DESCRIPTION DES DESSINS

La présente invention sera mieux comprise sur la base de la description qui va suivre et des dessins en annexe sur lesquels:

- la figure 1A est une vue de dessus d'un exemple de réalisation d'une interface de stimulation tactile,
- la figure 1B est une vue en coupe de la figure 1A selon le plan A-A,
- la figure 1C est une vue de détail de la figure 1B au niveau d'un actionneur,
- la figure 2 est une représentation schématique d'un organigramme du procédé de génération de signaux de commande des actionneurs d'une interface tactile selon l'invention,
- les figures 3A à 3C sont des exemples de fonctions continues représentatives de la simulation souhaitée.

## EXPOSÉ DÉTAILLÉ DE MODES DE RÉALISATION PARTICULIERS

Dans la description qui va suivre, l'invention sera décrite principalement dans l'application à une interface de stimulation tactile. Mais l'invention s'applique à une interface destinée par exemple à manipuler des objets.

Dans la description qui va suivre, on considérera qu'une surface tactile est destinée à être touchée par la pulpe d'un doigt ou de plusieurs doigts à des fins de simplicité. Mais la surface de l'interface selon l'invention est apte à appliquer une stimulation à toute partie du corps de l'opérateur sensible au sens du toucher.

On entend par « point de focalisation », le point où les ondes acoustiques sont focalisées et qui est le siège d'un déplacement de grande amplitude de la surface et par « zone de stimulation » la zone où l'on souhaite générer une lubrification ultrasonique.

L'effet de lubrification acoustique requiert un déplacement entre les doigts et la surface. Dans la description qui va suivre, c'est le doigt qui est déplacé par rapport à la surface. Un système dans lequel ce serait la surface qui serait déplacée par rapport au doigt fixe ou toute autre partie du corps, ou dans lequel la surface et le doigt ou toute autre partie du corps seraient mobiles, entre dans le cadre de la présente invention.

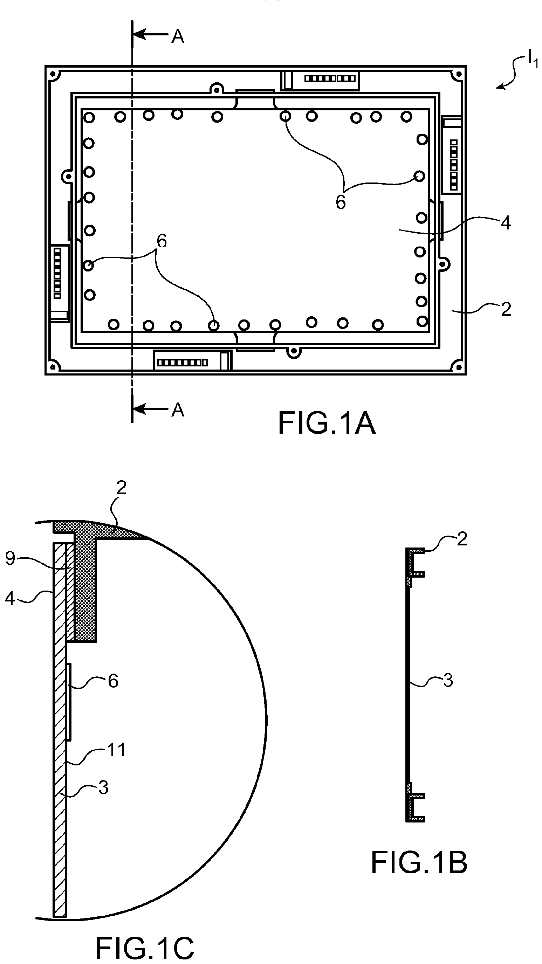

Sur les figures 1A à 1C, on peut voir un premier exemple de réalisation d'une interface tactile selon l'invention.

L'interface tactile I1 comporte un cadre 2, un élément 3 muni d'une surface 4 maintenue sur le cadre 2, et sur laquelle par exemple un ou des doigts peuvent venir en contact, et des actionneurs 6 fixés sur l'élément 3 et aptes à appliquer une contrainte mécanique à la surface 4, la contrainte étant orientée transversalement par rapport à la surface. La partie suspendue de la surface 4 forme une surface destinée à être explorée tactilement. Dans le cas d'une interface de manipulation d'objet, la surface 4 est destinée à supporter un ou des objets.

L'élément 3 est, dans l'exemple représenté, sous forme d'une plaque.

Le cadre forme un support rigide pour la plaque 3. De manière avantageuse, un matériau amortissant 9, est interposé entre la plaque 3 et le support rigide. Avantageusement le matériau amortissant 9 est une mousse adhésive, qui en plus d'atténuer les vibrations dans la plaque 3 et maintient la plaque 3 sur le cadre.

Les actionneurs 6 sont fixés, par exemple par collage sur la face 11 de l'élément 3 opposée à la surface 4. Dans l'exemple représenté, les actionneurs sont montés le long du bord de l'élément 3. Dans un autre exemple, les actionneurs peuvent être disposés en tout point de l'élément 3. En outre les actionneurs pourraient être sur la surface tactile 4.

La surface 4 est destinée à être le siège d'ondes de flexion ou ondes transversales générées par les contraintes appliquées par les actionneurs. Selon l'invention, les ondes de flexion sont focalisées de sorte à produire une stimulation tactile au point de focalisation.

L'élément portant la surface 4 est par exemple un substrat rigide transparent ou non. Le substrat peut être plan ou incurvé. Le substrat peut comporter un ou plusieurs matériaux. En outre il peut avoir une épaisseur comprise entre 0,1 mm et 5 mm.

Par exemple, l'élément portant la surface 4 est par exemple une plaque transparente en verre, en polycarbonate, en PMMA, ou non-transparente en métal, en céramique, plastique ou autre.

La mise en œuvre d'un substrat transparent permet par exemple d'adapter l'interface à un écran, par exemple à l'écran d'une tablette tactile.

Dans l'exemple représenté, les actionneurs sont des actionneurs piézoélectriques. Ils comportent un matériau piézoélectrique et deux électrodes de part et d'autre du matériau piézoélectrique permettant de lui appliquer une différence de potentiel. L'application d'une différence de potentiel aux bornes de l'actionneur piézoélectrique produit à la surface de la plaque des efforts tangents à la plaque. Cet effort courbe la surface de la plaque. Il en résulte un déplacement dans la direction perpendiculaire au plan de la surface.

En variante, les actionneurs peuvent être électromagnétiques. Dans ce cas un effort perpendiculaire au plan de la surface est produit par l'action d'un champ électromagnétique sur un aimant. L'aimant ou la bobine est solidaires de la surface.

Dans l'exemple représenté, l'interface comporte trente-deux actionneurs disposés le long des bords de la surface 4, cependant ce nombre n'est pas limitatif. On peut par exemple prévoir 1, 10 ou plusieurs dizaines d'actionneurs, par exemple 40, répartis sur le support.

L'interface comporte également une unité de commande destinée à générer des signaux aux actionneurs afin qu'ils appliquent des efforts à la surface de sorte à générer des ondes de flexion en un point de focalisation donné.

Les efforts appliqués par les actionneurs 6 sur la surface 4 sont calculés par un procédé de retournement temporel, ce qui permet aux actionneurs de générer des ondes interférant de façon constructives en un ou plusieurs point(s) donnés de la surface et à un instant souhaité. L'utilisateur ressent, non pas les ondes se propageant dans la plaque mais l'impulsion produite au(x) point(s) et à l'instant souhaité due à l'interférence constructive. Le gain des actionneurs est réglé de sorte que l'amplitude partout ailleurs, en dehors du point de focalisation, soit telle qu'on ne perçoive pas la vibration. Le contraste, qui désigne le rapport de l'amplitude au point de focalisation par l'amplitude quadratique moyenne en tout autre point est donc une grandeur critique qu'il convient de maximiser pour produire une stimulation clairement perçue au point de focalisation sans créer de stimulus en un autre point. Dans l'exemple présenté, le contraste pour une focalisation unique vaut C=43 et l'amplitude au point de focalisation atteint a=14 $\mu$m.

La mousse adhésive présente dans l'exemple sert, d'une part à maintenir la plaque sur son support et d'autre part à atténuer les vibrations de celle-ci. Cette atténuation permet de réduire la constante d'atténuation $\tau$ et donc de diminuer la période de répétition de focalisation $T_r$ sans altérer le contraste de focalisation répétée $\hat{C}$, conformément à l'expression donnée plus bas. Cette atténuation peut être également ajustée par un choix approprié de matériau pour la plaque ou par l'ajout d'un film à sa surface.

De manière avantageuse, la surface est telle qu'elle limite, voire empêche l'adhérence de la peau à la surface due à l'accumulation d'humidité. Par exemple, on peut envisager que la plaque portant la surface soit en un matériau poreux, par exemple en verre poreux, ou avec un état de surface limitant la surface de contact effective avec le doigt. Par exemple la surface subit un traitement hydrophobe ou est recouverte d'un film hydrophobe. L'épaisseur du film, par exemple entre quelques dizaines et quelques centaines de μm, est telle que le film n'a pas ou peu d'effet sur la transmission de la stimulation de la surface au doigt. Le film est par exemple collé ou déposé sur la surface.

L'interface comporte également une unité de commande UC destinée à générer des signaux aux actionneurs afin qu'ils appliquent des efforts à la surface 4, afin de faire varier en un ou plusieurs points de focalisation le niveau de friction, par exemple en vue de reproduire ou simuler une texture, qui peut être une rugosité ou une texture plus douce.

Pour cela, l'unité de commande met en œuvre un procédé de retournement temporel déterminant des réponses impulsionnelles retournées afin de générer un déplacement d'un point donné de la surface, appelé point de focalisation et une convolution de ces réponses impulsionnelles retournées par un signal continu.

L'interface comporte également une unité de commande UC destinée à générer des signaux aux actionneurs afin qu'ils appliquent des efforts à la surface 4 de sorte à générer des ondes de flexion en un point de focalisation donné.

Les efforts appliqués par les actionneurs 6 sur la surface 4 sont calculés par un procédé de retournement temporel, ce qui permet aux actionneurs de générer des ondes progressives constructives en un ou plusieurs point(s) donnés de la surface et à un instant souhaité. L'utilisateur ressent, non pas le passage d'une onde progressive, mais l'amplitude atteinte au(x) point(s) et à l'instant souhaité due à l'interférence constructive. Le gain des actionneurs est réglé de sorte que l'amplitude partout ailleurs, en dehors du point de focalisation, soit inférieure au seuil de sensibilité tactile. Le seuil de sensibilité tactile désigne la plus faible amplitude vibratoire perceptible. Il dépend des conditions de contact et de la fréquence mais se situe autour de 10 μm. On peut donc amplifier ou atténuer le déplacement de la surface de sorte que seule l'amplitude atteinte aux points de focalisation soit supérieure à ce seuil et donc soit perceptible. La surface semble ainsi immobile excepté aux points de focalisation.

L'interface comporte avantageusement des moyens de détection 10 de la présence des doigts de l'utilisateur sur l'interface afin de générer une lubrification acoustique aux zones de contact du ou des doigts avec la surface. La lubrification acoustique peut alors n'être générée qu'au cours d'exploration par les doigts. La consommation électrique de l'interface peut alors être réduite ce qui est particulièrement intéressant dans le cas d'interfaces de stimulation tactile appliquées à des appareils portables. Il peut s'agir par exemple de moyens de type capacitif ou optique. L'interface comporte également des moyens de suivi de la position du ou des doigts 12.

Dans le cas d'une détection capacitive, la plaque portant la surface formant une des plaques d'un condensateur à capacité variable et la pulpe du doigt forme l'autre plaque. Il est en outre possible de déterminer la direction et le sens dans lesquels l'utilisateur a l'intention de déplacer son doigt sur la surface, ce qui permet d'éviter un effet retard dans la simulation. Pour cela, on peut mettre en œuvre des capteurs de force pour mesurer les efforts tangentiels produits par le glissement du doigt sur la surface. Ces efforts sont produits par la friction et sont de direction opposée au mouvement. Les efforts exercés par le doigt sur la plaque sont transmis de la plaque à son support. On peut alors disposer de tels capteurs de force à l'interface entre la plaque et son support.

Nous allons décrire brièvement le principe du procédé de retournement temporel.

Le principe du retournement temporel des ondes repose sur l'invariance de l'équation de propagation d'ondes par renversement du temps et sur le principe de réciprocité.

Soit $h(x_a|x_q, y_a|y_q, t)$ le déplacement hors plan de la surface enregistré au cours du temps $t$ en un point de coordonnées $(x_a, y_a)$ après qu'un signal impulsionnel a été émis par un actionneur en $(x_q, y_q)$. On appelle $h(x_a|x_q, y_a|y_q, t)$ la réponse impulsionnelle entre les points $a$ et $q$.

En considérant que la réponse du système plaque et actionneur est linéaire, si l'actionneur situé en $q$ émet non plus une impulsion mais un signal $s_q(t)$, le déplacement au point $a$ est alors donné par: $u(x_a, y_a, t) = h(x_a|x_q, y_a|y_q, t) \otimes s_q(t)$ avec $\otimes$ l'opérateur de convolution.

Ainsi, si l'actionneur situé en $q$ émet, non plus une impulsion mais la réponse impulsionnelle retournée temporellement depuis l'instant $T$ jusqu'à l'instant initial $t = 0$, soit

$$s_q(t) = h\big(x_a|x_q, y_a|y_q, T - t\big) \text{ avec } 0 < t < T,$$

le déplacement produit en un point b quelconque sera :

$$u(x_b, y_b, t) = h\big(x_b|x_q, y_b|y_q, t\big) \otimes s_q(t) = h\big(x_b|x_q, y_b|y_q, t\big) \otimes h\big(x_a|x_q, y_a|y_q, T - t\big)$$

$$= \int_0^t h\big(x_b|x_q, y_b|y_q, t - \xi\big) h\big(x_a|x_q, y_a|y_q, T - \xi\big) d\xi$$

Le déplacement est ainsi le résultat de l'intégrale du produit de deux fonctions qui ne sont a priori pas corrélées dont le résultat est donc de moyenne nulle. On a en un point b et un instant t quelconque un déplacement de moyenne nulle qui constitue une vibration de fond présente sur l'ensemble de la plaque. En revanche, à l'instant $t = T$ correspondant à la fin de la phase d'émission par l'actionneur, on obtient au point $a$ un déplacement :

$$u(x_a, y_a, T) = \int_0^T h\big(x_a | x_q, y_a | y_q, T - \xi\big)^2 d\xi$$

On intègre cette fois une quantité strictement positive. Le résultat est un déplacement non nul de grande amplitude. Ce déplacement est obtenu uniquement au point $a$ et à l'instant $T$, d'où la focalisation des ondes dans l'espace et dans le temps.

Dans le cas où Q actionneurs sont utilisés, leurs contributions s'additionnent pour donner :

$$u(x, y, t) = \sum_{q=1}^{Q} u_q(x, y, t)$$

Le contraste est défini comme le rapport entre le déplacement au point de focalisation au temps T et l'écart type de ce déplacement en un point quelconque $b$. Il est obtenu par la relation :

$$C = \sqrt{BT_c} \sqrt{\frac{Q\tau(1 - e^{-2T/\tau})}{(Q + 1)\tau\left(1 - e^{-\frac{2T}{\tau}}\right) + T_c}}$$

Avec Q le nombre d'actionneurs, T la durée de la fenêtre de retournement, $\tau$ la constant de temps d'atténuation des vibrations dans la plaque et $T_c$ le temps caractéristique de la plaque ou densité modale de la plaque en secondes, ou mode propre par Hz et $B = f_{max} - f_{min}$ la bande passante, en hertz des signaux émis par les actionneurs.

Dès lors que la focalisation est répétée dans le temps avec une période $T_r$, le contraste est affecté selon la relation :

$$\hat{C} = C\sqrt{1 - e^{-2T_r/\tau}}$$

Pour préserver le contraste, les focalisations successives sont répétées avec une période $T_r \geq \tau$.

La fréquence moyenne des signaux définie la résolution maximale atteignable par la relation :

$$R_s = \sqrt[4]{\frac{D}{\rho_s}} \sqrt{\frac{8}{2\pi f_m}}$$

Avec $R_s$ la résolution spatiale, ou largeur à mi-hauteur du point de focalisation, $f_m = \frac{f_{max} + f_{min}}{2}$ la fréquence moyenne des signaux émis, $D$ la rigidité en flexion et $\rho_s$ la masse par unité de surface de la plaque.

Les réponses impulsionnelles $h_{Anl}(t)$ peuvent être obtenues, soit de façon expérimentale en enregistrant effectivement les réponses impulsionnelles, soit par simulation, soit de manière analytique lorsque la géométrie reste simple.

On réalise ensuite une base de données des réponses impulsionnelles retournées en différents points de la surface, cette base de données est utilisée pour générer les signaux envoyés aux actionneurs. Il peut s'agir de tous points de la surface ou selon un maillage très serré, afin d'offrir une grande résolution dans la stimulation. En variante et de manière particulièrement avantageuse, on réalise une base de données des réponses impulsionnelles en un nombre de points donnés de la surface, par exemple répartis sous la forme d'une grille ou sur un contour de la surface. On détermine ensuite les réponses impulsionnelles entre les points de la grille, par exemple par interpolation, ce qui permet ainsi de déterminer une réponse impulsionnelle en tout point de la surface, et de réduire le temps de réalisation de la base de données et sa taille. L'interpolation peut se faire suivant différentes méthodes, par exemple il peut s'agir d'une interpolation de Fourier, de la méthode « Compressed Sensing », les méthodes des solutions fondamentales, ou une méthode s'appuyant sur une forme variationnelle de l'équation de propagation.

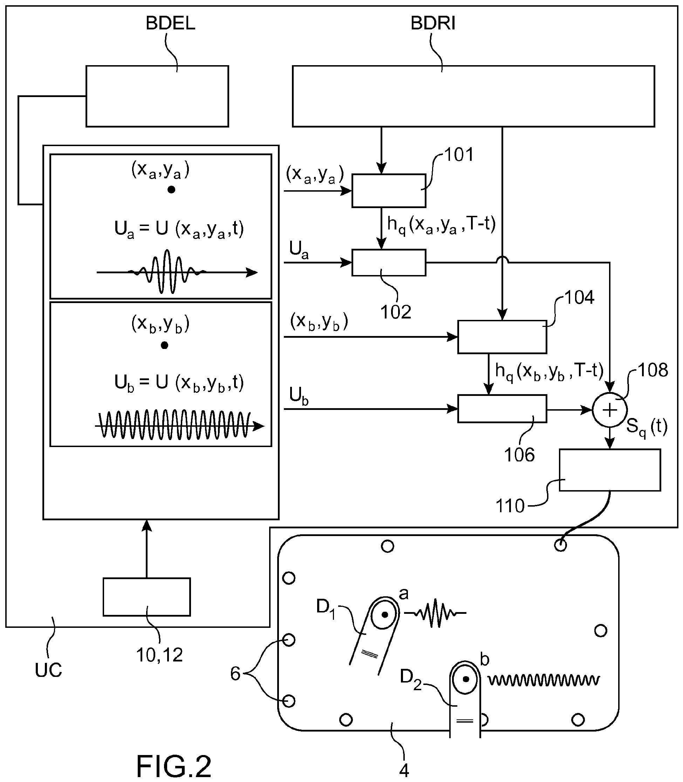

Sur la figure 2, on peut voir une représentation schématique du procédé de génération de signaux à des actionneurs d'une interface tactile selon l'invention. Un exemple schématique d'une interface tactile est représentée, elle met en œuvre 7 actionneurs.

Dans l'exemple représenté, l'unité de commande génère simultanément des zones de lubrification a et b pour deux doigts D1 et D2.

On souhaite générer une première lubrification dans la zone a et une deuxième lubrification dans la zone b.

L'unité de commande comporte une base de données des effets de lubrification acoustique BDEL comportant des fonctions continues représentatives d'effets de lubrification acoustique.

La première lubrification est représentée par la fonction continue Ua = U(xa, ya, t) qui est une fonction « sinus fenêtré » (« sine burst » en terminologie anglo-saxonne), et la deuxième lubrification est représentée par la fonction continue Ub = U(xb, yb, t) qui est une fonction sinusoïdale. L'effet de lubrification obtenu pour chacune de ces fonctions est différent.

L'effet de lubrification est lié à l'amplitude, c'est à dire à l'enveloppe de la vibration. Dans le cas de la fonction Ua, l'effet de lubrification ne dure qu'un court instant, parce que le motif a changé ou parce que le doigt bouge et qu'il n'y a plus lieu de lubrifier. Dans le cas de la fonction Ub, la lubrification est maintenue.

L'emplacement de chaque point de focalisation est déterminé par ses coordonnées dans le repère (x, y) désignées (xa, ya) et (xb, yb).

Dans une première étape, on détecte la présence du doigt, par exemple en détectant le contact du ou des doigts avec le surface, de sorte à ne générer une lubrification qu'en présence de doigts.

Dans une étape suivante, le signal à envoyer à chaque actionneur est déterminé.

Pour la zone a et la première lubrification Ua : tout d'abord on recherche dans la base de données BDRI des réponses impulsionnelles retournées, la réponse impulsionnelle retournée au point a. Soit la réponse existe, car elle a été déterminée préalablement, soit elle est déterminée par interpolation spatiale comme cela a été expliqué ci-dessus (étape 100). Cette réponse est désignée hq(xa, ya, T-t).

Chaque réponse impulsionnelle est ensuite convoluée à la fonction de lubrification continue Ua (étape 102).

Les mêmes étapes sont réalisées pour la zone b (étapes 104 et 106), la réponse impulsionnelle retournée est convoluée à la fonction de lubrification continue Ub.

La convolution de la forme d'onde Ua avec une réponse impulsionnelle retournée correspond à un filtrage de cette forme d'onde de sorte que l'on obtienne, après propagation dans le milieu un déplacement conforme à cette forme d'onde au point souhaité.

Un signal correspondant à la somme des signaux calculés pour chaque point (étape 108) est envoyé à un actionneur. Cet ensemble d'opérations est réalisé simultanément pour tous les actionneurs de la surface.

De manière très avantageuse, une étape d'amplification 110 du signal a lieu.

Ainsi chaque actionneur reçoit un signal continu et applique un effort continu à la surface, il en résulte un déplacement continu aux points de focalisation a et b.

La fonction continue utilisée pour la convolution peut varier, ainsi des fonctions continues différentes peuvent être associées à une même zone et l'une d'elles est sélectionnée pour la convolution en fonction de paramètres tels que le temps, un affichage sur l'écran, une action de l'opérateur... En outre, une nouvelle fonction continue peut être établie en combinant au moins deux fonctions de la base de données.

Comme cela a été mentionné ci-dessus, le déplacement du ou des doigts sur la surface est suivi, voire le déplacement du doigt est prédit, les signaux envoyés aux actionneurs sont donc recalculés en continu pour générer une lubrification acoustique sur le chemin de déplacement du ou des doigts. Dans le cas où le doigt est fixe et la surface est déplacée, l'unité de commande utilise les informations sur le déplacement de la surface pour générer les signaux aux actionneurs. Dans le cas où le ou les doigts sont mobiles et la surface est déplacée, l'unité de commande prend en compte les informations sur le déplacement de la surface et détecte le déplacement du doigt pour générer les signaux aux actionneurs.

Ainsi un effet de lubrification différent peut être généré pour chaque doigt dans les zones a et b, le coefficient de frottement entre le doigt et la surface est alors réduit.

De manière avantageuse, la fréquence maximale de chaque fonction continue est telle qu'elle évite la mise en résonance de la surface. Ainsi des lubrifications différentes peuvent être générées dans des zones différentes de la surface.

La fonction continue est typiquement une sinusoïde de fréquence ultrasonore, dite fréquence porteuse, modulée en amplitude par une fonction dont la fréquence est comprise dans la bande de sensibilité tactile, i.e. de préférence inférieure à <1kHz. La fréquence porteuse est idéalement dans la gamme ultrasonore, de préférence supérieure à 20kHz et peut atteindre jusqu'à plusieurs dizaines, voire plusieurs centaines de kHz. Préférentiellement, la fréquence de la fonction continue ne correspond pas à une fréquence de résonance de la surface. La fonction continue peut écrire comme le produit d'une porteuse P par une fonction de modulation M, soit $U(t) = P(t) \times M(t)$.

La fonction continue représentative de la lubrification souhaitée peut être en variante une fonction carrée, en dent de scie, voire une fonction aléatoire.

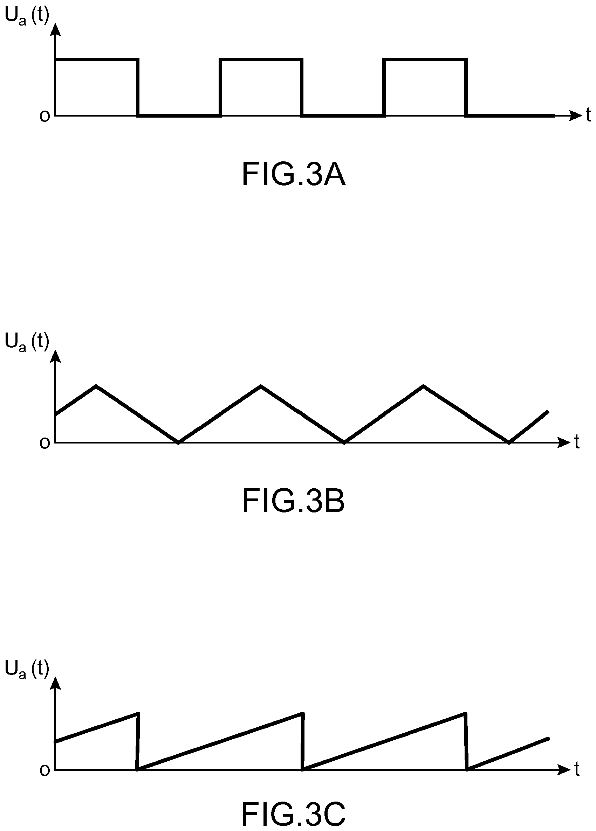

Par exemple, dans le cas d'une fonction carrée telle que représentée sur la figure 3A, la demi-période haute d'une fonction carrée applique un effet de lubrification au doigt en contact avec la surface, ce qui diminue le frottement. Dans la demi-période basse, la lubrification est plus faible. Dans cet exemple aucune lubrification n'est générée, le frottement naturel du matériau de la surface s'applique au doigt. Le doigt qui se déplace sur la surface subit alors deux frottements bien distincts

Sur la figure 3B, on peut voir une fonction triangulaire avec laquelle la diminution du frottement appliqué au doigt est progressive et l'augmentation du frottement appliqué au doigt est également progressive.

Dans le cas d'une fonction en dent de scie telle que représentée sur la figure 3C, celle-ci applique un changement de frottement au doigt pendant la montée et retombe à 0 instantanément.

La convolution à la fonction Ua génère un signal à l'actionneur ou aux actionneurs de générer au point de focalisation d'un déplacement d'amplitude variable au cours du temps. Le niveau de lubrification est alors modulé au cours du temps.

De manière avantageuse, on peut envisager de moduler le niveau de lubrification au cours du déplacement, ce qui a pour effet de moduler le coefficient de frottement. En choisissant une modulation adaptée, il est possible de transmettre un signal de confirmation à l'utilisateur qu'il est sur le bon chemin. En effet cette modulation du coefficient de frottement maintient une certaine attention de l'utilisateur et rassure celui-ci.

On peut envisager de tenir compte de l'intensité de la ou des forces d'appui des doigts sur la surface pour moduler l'effet de lubrification, par exemple on peut envisager que, plus l'intensité de la force exercée par un doigt sur la surface est importante, plus le niveau de lubrification est important.

Comme cela a été mentionné ci-dessus, la fonction continue peut écrire comme le produit d'une porteuse P par une fonction de modulation M, soit $U(t) = P(t) \times M(t)$. De manière très avantageuse, M(t) peut être une fonction continue permettant, en modulant le niveau de lubrification au cours du déplacement du doigt de la surface, de simuler une texture. En effet, en choisissant le type de modulation, on peut simuler tout type de texture. Par exemple, on peut simuler une surface rugueuse ou une surface polie.

Par exemple, si M(t) évolue lentement la texture est perçue comme une ondulation de la surface. Lorsque les évolutions de M(t) sont rapides, l'utilisateur perçoit une granulosité plus fine. Pour un velours, on aurait une sinusoïde lente, une surface rugueuse peut être un signal aléatoire présentant des variations rapides. Une surface polie, donc constamment lisse correspond à une fonction M(t) constante à une valeur élevée.

Dans l'application à un écran tactile, le ou les actionneurs sont avantageusement disposés au niveau des bords de la surface afin de ne pas gêner la visibilité de l'écran. Dans le cas où la surface ne serait pas transparente, le ou les actionneurs pourraient être disposés à tout endroit de la surface.

L'interface de stimulation tactile selon la présente invention présente l'avantage de pouvoir, d'une part restituer une texture comme cela a été décrit ci-dessus, et d'autre part de simuler un relief, un clic de confirmation ou une raideur locale en utilisant les actionneurs et la base de données de réponses impulsionnelles retournées.

L'interface selon la présente invention peut être mise en œuvre par exemple dans les tablettes tactiles dans des écrans, dans des tableaux de bord, des téléphones tactiles multifonctions.

L'interface selon la présente invention peut également être mise en œuvre dans le domaine de la micromanipulation, de l'optique, de la biologie,...

## Revendications

**1.** Interface comportant une surface (4), au moins un actionneur (6) destiné à appliquer un effort sur ladite surface (4), et des moyens de commande dudit au moins un actionneur, lesdits moyens de commande étant destinés à envoyer à l'actionneur (6) des signaux correspondant aux efforts à appliquer à ladite surface, lesdits efforts étant déterminés par un procédé de retournement temporel, les moyens de commande comportant une base de données de réponses impulsionnelles retournées, **caractérisée en ce que** les moyens de commande comportent également une base de données des effets de lubrification acoustique comportant au moins une fonction continue représentative d'un effet de lubrification acoustique, et des moyens de convolution d'une réponse impulsionnelle retournée à une fonction continue, et dans laquelle les moyens de commande sont configurés, pour produire une lubrification acoustique dans au moins une zone donnée de la surface, pour générer au moins un signal formé à partir d'une convolution d'une réponse impulsionnelle retournée déterminée à partir de la base de données de réponses impulsionnelles retournées à une fonction continue de la base de données des effets de lubrification acoustique.

**2.** Interface selon la revendication 1, dans laquelle les moyens de commande sont configurés pour commander ledit au moins un actionneur de sorte que des lubrifications acoustiques différentes soient générées dans au moins deux zones de la surface simultanément.

3. Interface selon la revendication 1 ou 2, dans laquelle la base de données des effets de lubrification acoustique comporte au moins une fonction sinusoïdale.

4. Interface selon l'une des revendications 1 à 3, comportant des moyens de détection du contact d'au moins un objet avec la surface et des moyens de suivi du déplacement relatif dudit objet et de la surface, les moyens de détection du contact d'au moins un objet avec la surface et/ou les moyens de suivi du déplacement relatif dudit objet et de la surface étant avantageusement de type capacitif, de sorte à ne produire une lubrification acoustique qu'au niveau du contact entre l'objet et la surface.

5. Interface selon l'une des revendications 1 à 4, comportant des moyens de détection de la force de contact entre au moins un objet et la surface et dans laquelle les moyens de commande sont configurés pour moduler l'effet de lubrification acoustique en fonction de ladite force de contact.

6. Interface selon l'une des revendications 1 à 5, comportant plusieurs actionneurs (6).

7. Interface selon l'une des revendications 1 à 6, dans laquelle la surface est portée par une plaque, le ou les actionneurs (6) étant situés en contact avec la plaque au niveau d'au moins un bord de celle-ci, la plaque étant avantageusement transparente.

8. Interface de stimulation tactile comportant une interface selon l'une des revendications 1 à 7, la surface (4) étant destinée à être explorée tactilement par au moins un organe d'un utilisateur.

9. Interface de stimulation tactile selon la revendication précédente, dans laquelle les moyens de commande sont configurés pour moduler l'effet de lubrification acoustique en fonction du déplacement relatif dudit organe et de ladite surface de sorte à simuler un effet de texture.

10. Interface de stimulation tactile selon la revendication 8 ou 9, dans laquelle les moyens de commande sont également configurés pour, à partir de la base de données de réponses impulsionnelles retournées, envoyer à l'actionneur (6) des signaux correspondant à des efforts à appliquer à ladite surface de sorte à stimuler tactilement ledit organe selon un motif tactile donné, et/ou l'interface de stimulation tactile comporte des moyens pour au moins réduire l'adhérence dudit organe à la surface due à une accumulation d'humidité, lesdits moyens étant formés par une plaque en un matériau poreux, qui porte la surface, ou par un traitement hydrophobe appliqué à la surface ou par un film hydrophobe recouvrant ladite surface.

11. Procédé de commande d'une interface selon l'une des revendications 1 à 10, de sorte à générer au moins un effet de lubrification acoustique dans au moins une première zone donnée, comportant les étapes :

   a) détermination d'une réponse impulsionnelle retournée,
   b) sélection d'une fonction continue en fonction de l'effet de lubrification acoustique souhaité,
   c) convolution de ladite réponse impulsionnelle retournée à ladite fonction continue,
   d) génération d'un signal sur la base du résultat de ladite convolution et envoi dudit signal audit au moins un actionneur et génération d'impulsions.

12. Procédé de commande selon la revendication 11, dans lequel les étapes a) à d) sont réalisées simultanément pour la première zone et pour au moins une deuxième zone distincte de la première zone, et dans lequel lors de l'étape d) le signal envoyé audit actionneur est la somme du signal généré pour la première zone et le signal généré pour la deuxième zone.

13. Procédé de commande selon la revendication 11 ou 12, dans lequel lors de l'étape a), la réponse impulsionnelle retournée est choisie dans une base de données, ou dans lequel, lors de l'étape a), la réponse impulsionnelle retournée est déterminée par interpolation entre au moins deux réponses impulsionnelles retournées choisies dans une base de données.

14. Procédé de commande selon l'une des revendications 11 à 13, l'interface étant une interface de stimulation tactile, ledit procédé comportant une étape préalable à l'étape a) de détection d'une zone contact entre l'organe et le doigt, et dans lequel, lors de l'étape a), la réponse impulsionnelle retournée est déterminée pour ladite zone de contact, le procédé comportant avantageusement une étape, en amont de l'étape d), de modulation de l'effet de lubrification acoustique en fonction du déplacement relatif d'un organe en contact avec la surface.

15. Procédé de commande selon la revendication 14, dans lequel la force exercée par l'organe sur la surface est mesurée et est prise en compte pour moduler l'effet de lubrification acoustique.

**Patentansprüche**

1. Schnittstelle, die eine Oberfläche (4), zumindest einen Aktuator (6) zum Aufbringen einer Kraft auf die Oberfläche (4) und Mittel zur Steuerung des zumindest einen Aktuators enthält, wobei die Steuermittel dazu bestimmt sind, dem Aktuator (6) Signale zu senden, die den auf die Oberfläche aufzubringenden Kräften entsprechen, wobei die Kräfte durch ein Zeitumkehrverfahren bestimmt werden und die Steuermittel eine Datenbank von umgekehrten Impulsantworten umfassen,
   **dadurch gekennzeichnet, dass** die Steuermittel ferner eine Datenbank von akustischen Schmiereffekten enthalten, die zumindest eine kontinuierliche Funktion umfassen, die repräsentativ ist für einen akustischen Schmiereffekt, sowie Mittel zum Falten einer umgekehrten Impulsantwort auf eine kontinuierliche Funktion, und wobei die Steuermittel dazu ausgelegt sind, eine akustischen Schmierung in zumindest einem gegebenen Bereich der Oberfläche zu bewirken, um zumindest ein Signal zu erzeugen, das aus einer Faltung einer umgekehrten Impulsantwort, die aus der Datenbank der umgekehrten Impulsantworten auf eine kontinuierliche Funktion der Datenbank der akustischen Schmiereffekte bestimmt wird, gebildet wird.

2. Schnittstelle nach Anspruch 1,
   wobei die Steuermittel dazu ausgelegt sind, den zumindest einen Aktuator so zu steuern, dass in zumindest zwei Bereichen der Oberfläche gleichzeitig unterschiedliche akustische Schmierungen erzeugt werden.

3. Schnittstelle nach Anspruch 1 oder 2,
   wobei die Datenbank der akustischen Schmiereffekte zumindest eine Sinusfunktion umfasst.

4. Schnittstelle nach einem der Ansprüche 1 bis 3,
   enthaltend Mittel zum Erfassen des Kontakts zumindest eines Objekts mit der Oberfläche und Mittel zum Verfolgen der relativen Verschiebung des Objekts und der Oberfläche,
   wobei die Mittel zum Erfassen des Kontakts zumindest eines Objekts mit der Oberfläche und/oder die Mittel zum Verfolgen der relativen Verschiebung des Objekts und der Oberfläche vorzugsweise vom kapazitiven Typ sind, so dass eine akustische Schmierung nur im Bereich des Kontakts zwischen dem Objekt und der Oberfläche erzeugt wird.

5. Schnittstelle nach einem der Ansprüche 1 bis 4,
   enthaltend Mittel zum Erfassen der Kontaktkraft zwischen zumindest einem Objekt und der Oberfläche,
   wobei die Steuermittel dazu ausgelegt sind, die den akustischen Schmiereffekt in Abhängigkeit von der Kontaktkraft zu modulieren.

6. Schnittstelle nach einem der Ansprüche 1 bis 5,
   enthaltend mehrere Aktuatoren (6).

7. Schnittstelle nach einem der Ansprüche 1 bis 6,
   wobei die Oberfläche von einer Platte getragen wird, wobei der bzw. die Aktuatoren (6) an zumindest einer Kante der Platte in Kontakt mit dieser stehen und wobei die Platte vorteilhaft transparent ist.

8. Taktile Stimulationsschnittstelle mit einer Schnittstelle nach einem der Ansprüche 1 bis 7,
   wobei die Oberfläche (4) dazu bestimmt ist, mit zumindest einem Körperglied eines Benutzers taktil erkundet zu werden.

9. Taktile Stimulationsschnittstelle nach dem vorhergehenden Anspruch,
   wobei die Steuermittel dazu ausgelegt sind, den akustischen Schmiereffekt in Abhängigkeit von der relativen Verschiebung des Körperglieds und der Oberfläche zu modulieren, um einen Textureffekt zu simulieren.

10. Taktile Stimulationsschnittstelle nach Anspruch 8 oder 9,

wobei die Steuermittel ferner dazu ausgelegt sind, aus der Datenbank der umgekehrten Impulsantworten Signale an den Aktuator (6) zu senden, die Kräften entsprechen, die auf die Oberfläche aufzubringen sind, um das Körperglied gemäß einem vorgegebenen taktilen Muster taktil zu stimulieren, und/oder

die taktile Stimulationsschnittstelle Mittel enthält, um die Haftung des Körperglieds an der Oberfläche aufgrund einer Ansammlung von Feuchtigkeit zumindest zu verringern, wobei die Mittel aus einer Platte aus porösem Material gebildet sind, die die Oberfläche trägt, oder aus einer hydrophoben Behandlung der Oberfläche oder aus einem hydrophoben Film, der die Oberfläche überdeckt.

**11.** Verfahren zum Steuern einer Schnittstelle nach einem der Ansprüche 1 bis 10, um zumindest einen akustischen Schmiereffekt in zumindest einem ersten vorgegebenen Bereich zu erzeugen, umfassend die Schritte:

a) Bestimmen einer umgekehrten Impulsantwort,
b) Auswählen einer kontinuierlichen Funktion in Abhängigkeit von dem gewünschten akustischen Schmiereffekt,
c) Faltung der umgekehrten Impulsantwort auf die kontinuierliche Funktion,
d) Erzeugen eines Signals basierend auf dem Ergebnis der Faltung und Senden des Signals an den zumindest einen Aktuator und Erzeugen von Impulsen.

**12.** Steuerungsverfahren nach Anspruch 11,

wobei die Schritte a) bis d) gleichzeitig für den ersten Bereich und für zumindest einen zweiten Bereich, der sich vom ersten Bereich unterscheidet, ausgeführt werden, und

wobei in Schritt d) das an den Aktuator gesendete Signal die Summe des für den ersten Bereich erzeugten Signals und des für den zweiten Bereich erzeugten Signals ist.

**13.** Steuerungsverfahren nach Anspruch 11 oder 12,

wobei in Schritt a) die umgekehrte Impulsantwort aus einer Datenbank ausgewählt wird, oder

wobei in Schritt a) die umgekehrte Impulsantwort durch Interpolation zwischen zumindest zwei umgekehrten Impulsantworten, die aus einer Datenbank ausgewählt sind, bestimmt wird.

**14.** Steuerungsverfahren nach einem der Ansprüche 11 bis 13,

wobei die Schnittstelle eine taktile Stimulationsschnittstelle ist, wobei das Verfahren vor Schritt a) einen Schritt des Erfassens eines Kontaktbereichs zwischen dem Körperglied und dem Finger umfasst, und

wobei in Schritt a) die umgekehrte Impulsantwort für den Kontaktbereich bestimmt wird,

wobei das Verfahren vorteilhaft vor dem Schritt d) einen Schritt der Modulation des akustischen Schmiereffekts in Abhängigkeit von der relativen Verschiebung eines mit der Oberfläche in Kontakt stehenden Körperglieds umfasst.

**15.** Steuerungsverfahren nach Anspruch 14,

wobei die von dem Körperglied auf die Oberfläche ausgeübte Kraft gemessen und bei der Modulation des akustischen Schmiereffekts berücksichtigt wird.

**Claims**

**1.** An interface including a surface (4), at least one actuator (6) intended to apply a strain to said surface (4), and means for controlling said at least one actuator, said control means being intended to send to the actuator (6) signals corresponding to the strains to be applied to said surface, said strains being determined by a time reversal method, the control means including a database of reversed pulse responses, **characterized in that** the control means also including a database of the acoustic lubrication effects including at least one continuous function representative of an acoustic lubrication effect, and means for convoluting a reversed pulse response by a continuous function, and wherein the control means are configured, to produce an acoustic lubrication in at least one given area of the surface, to generate at least one signal formed from a convolution of a reversed pulse response determined from the database of reversed pulse responses by a continuous function of the database of the acoustic lubrication effects.

**2.** The interface according to claim 1, wherein the control means are configured to control said at least one actuator so that different acoustic lubrications are simultaneously generated in at least two areas of the surface.

**3.** The interface according to claim 1 or 2, wherein the database of the acoustic lubrication effects includes at least one sine function.

4. The interface according to one of claims 1 to 3, including means for detecting the contact of at least one object with the surface and means for tracking the relative displacement of said object and of the surface, the means for detecting the contact of at least one object with the surface and/or the means for tracking the relative displacement of said object and of the surface being advantageously of the capacitive type, so as to only produce an acoustic lubrication at the contact between the object and the surface.

5. The interface according to one of claims 1 to 4, including means for detecting the contact force between at least one object and the surface and wherein the control means are configured to modulate the acoustic lubrication effect as a function of said contact force.

6. The interface according to one of claims 1 to 5, including several actuators (6).

7. The interface according to one of claims 1 to 6, wherein the surface is carried by a plate, the actuator(s) (6) being located in contact with the plate at least at an edge thereof, the plate being advantageously transparent.

8. A tactile stimulation interface including an interface according to one of claims 1 to 7, the surface (4) being intended to be tactilely explored by at least one user's organ.

9. The tactile stimulation interface according to the previous claim, wherein the control means are configured to modulate the acoustic lubrication effect as a function of the relative displacement of said organ and of said surface so as to simulate a texture effect.

10. The tactile stimulation interface according to claim 8 or 9, wherein the control means are also configured, from the database of reversed pulse responses, to send to the actuator (6) signals corresponding to strains to be applied to said surface so as to tactilely stimulate said organ according to a given tactile pattern and/or the tactile stimulation interface include means for at least decreasing the adhesion of said organ to the surface due to a moisture build-up, said means being formed by a plate in porous material, which brings the surface, or by a hydrophobic treatment applied to the surface or a hydrophobic film covering said surface.

11. A method for controlling an interface according to one of claims 1 to 10, so as to generate at least one acoustic lubrication effect in at least one first given area, including the steps of:

   a) determining a reversed pulse response,
   b) selecting a continuous function as a function of the desired acoustic lubrication effect,
   c) convoluting said reversed pulse response by said continuous function,
   d) generating a signal based on the result of said convolution and sending said signal to said at least one actuator and generating pulses.

12. The control method according to claim 11, wherein steps a) to d) are simultaneously performed for the first area and for at least one second area distinct from the first area, and wherein during step d) the signal sent to said actuator is the sum of the signal generated for the first area and of the signal generated for the second area.

13. The control method according to claim 11 or 12, wherein during step a), the reversed pulse response is chosen from a database, or wherein, during step a), the reversed pulse response is determined by interpolation between at least two reversed pulse responses chosen from a database.

14. The control method according to one of claims 11 to 13, the interface being a tactile stimulation interface, said method including a step prior to step a) of detecting a contact area between the organ and the finger, and wherein, during step a), the reversed pulse response is determined for said contact area, the method advantageously including a step, before step d), of modulating the acoustic lubrication effect as a function of the relative displacement of an organ in contact with the surface.

15. The control method according to claim 14, wherein the force exerted by the organ on the surface is measured and is taken into account to modulate the acoustic lubrication effect.

FIG.1A

FIG.1C

FIG.1B

FIG.2

$U_a(t)$

FIG.3A

$U_a(t)$

FIG.3B

$U_a(t)$

FIG.3C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20013182611 A

**Littérature non-brevet citée dans la description**

- **T. WATANABE ; S. FUKUKI.** A method for controlling tactile sensation of surface roughness using ultrasonic vibration. *IEEE International Conference on Robotics and Automation,* 1995, 1134-1139

- **C. HUDIN ; J. LOZADA ; V. HAYWARD.** Localized Tactile Feedback on a Transparent Surface through Time-Reversal Wave Focusing. *IEEE Transactions on Haptics,* Avril 2015, vol. 8 (2), 188-198